# EUROPÄISCHE PATENTSCHRIFT

(11) **EP 1 738 093 B1**
(45) Veröffentlichungstag und Bekanntmachung des Hinweises auf die Patenterteilung: **13.05.2009**
(21) Anmeldenummer: 05707680.4
(22) Anmeldetag: 02.03.2005
(51) Int. Cl.: F16H 7/12, F02B 67/06

(54) **ZUGMITTELTRIEB, INSBESONDERE RIEMENTRIEB**
TRACTION DRIVE IN PARTICULAR BELT DRIVE
ENTRAINEMENT A MECANISME DE TRACTION, EN PARTICULIER ENTRAINEMENT PAR COURROIE

(30) Priorität: 19.04.2004 DE 102004018776
(43) Veröffentlichungstag der Anmeldung: 03.01.2007
(73) Patentinhaber: Schaeffler KG, 91074 Herzogenaurach (DE)
(72) Erfinder: STIEF, Hermann, 91448 Emskirchen (DE); BOGNER, Michael, 90542 Eckental (DE); HARTMANN, Bernd, 91085 Weisendorf (DE); KRAFT, Thomas, 90616 Neuhof/Zenn (DE); SCHMID, Michael, 91301 Forchheim (DE)
(86) Internationale Anmeldenummer: PCT/EP2005/002168
(87) Internationale Veröffentlichungsnummer: WO 2005/100820

(56) Entgegenhaltungen:
- DE-A1- 3 939 821
- DE-A1- 10 000 970
- DE-A1- 19 926 612
- US-A- 2002 086 751

## Beschreibung

### Gebiet der Erfindung

Die Erfindung betrifft einen Zugmitteltrieb, insbesondere einen Riementrieb, umfassend ein im Trieb integriertes, diesen nur kurzzeitig antreibendes Antriebselement, insbesondere einen Startergenerator, sowie eine während des Betriebs des Antriebselements im Zugtrum des Triebs angreifende Spanneinrichtung mit einem gegen eine Rückstellkraft auslenkbaren Hebelarm mit einer Zugmittelrolle, an der das zu spannende Zugmittel geführt ist, entsprechend dem Oberbegriff des Anspruchs 1 und wie er aus der US 2002086751 A bekannt ist.

### Hintergrund der Erfindung

Ein solcher Zugmitteltrieb kommt z. B. bei Kraftfahrzeugen zum Einsatz, wobei dort als nur temporär antreibendes Antriebselement entweder ein Anlasser, der ausschließlich eine Anlassfunktion hat, oder ein Startergenerator, der sowohl eine Anlasserfunktion wie auch eine Generatorfunktion hat, integriert ist. Um das Zugmittel, in der Regel einen Riemen, zur Übertragung der Antriebskräfte bzw. Antriebsmomente auf die integrierten, über den Trieb zu bewegenden Aggregate zu übertragen, sind in der Regel zwei Spanneinrichtungen vorgesehen, die am Zugmittel angreifen und dieses spannen. Die in der Regel vorgesehenen zwei Spanneinrichtungen greifen bezogen auf die Bewegungsrichtung des Zugmittels vor und hinter dem Antriebselement am Zugmittel an.

Nachdem das Antriebselement wie beschrieben nur kurzzeitig auf den Trieb einwirkt und nach dem Starten des gekoppelten Brennkraftmotors dieser z.B. über die Kurbelwelle den Trieb antreibt, ändert sich zwangsläufig die Eigenschaft des Zugmitteltrums, an dem zumindest die bezogen auf die Zugmittelbewegungsrichtung dem Antriebselement vorgeschaltete Spanneinrichtung angreift. Wird die Antriebseinrichtung betätigt, wird also der Trieb über sie angetrieben, so handelt es sich bei dem Zugmittelabschnitt um das Zugtrum, während bei inaktivem Antriebsmittel ein Wechsel eintritt, es handelt sich dann um das Leertrum.

Es kann nun im Anlassfall vorkommen, dass sich das Zugmittel im Zugtrum aufgrund des Antriebs über die Antriebseinrichtung (z.B. Riemenanlasser) stark verkürzt und folglich die Spanneinrichtung sehr weit gegen die Rückstellkraft ausgelenkt wird. Das gegenüberliegende Leertrum, an dem die zweite Spanneinrichtung angreift, verlängert sich entsprechend, die Spanneinrichtung wird rückstellkraftbedingt ausgelenkt, um das Leertrum zu spannen. Verlängert sich das Leertrum jedoch zu stark, ist der Arbeitsbereich nicht mehr ausreichend, das heißt, die Spanneinrichtung kann nicht mehr weiter in Spannrichtung bewegt werden, so dass das Leertrum nicht mehr oder nicht mehr hinreichend gespannt wird.

Aus der DE 199 26 612 A1 ist ein gattungsgemäßer, für eine Brennkraftmaschine bestimmter Zugmitteltrieb bekannt, der einen Starter-Generator umfasst. Die dem Zugmitteltrieb zugehörige Spannvorrichtung umfasst zwei Spannrollen, die an Hebelarmen gleicher Länge mit der Vorrichtung verbunden sind. Im Betriebszustand des Starter-Genrators ist eine erste Spannrolle einem Leertrum und eine zweite Spannrolle einem Zugtrum des Zugmitteltriebs zugeordnet.
Die ebenfalls zwei Spannrollen umfassende Spannvorrichtung gemäß der DE 100 00 970 A1 ist für einen, einen Starter-Generator einschließenden Zugmitteltrieb bestimmt. Die Spannrollen sind über zwei Hebelarme unterschiedlicher Länge schwenkbar an der Vorrichtung angelenkt.

### Zusammenfassung der Erfindung

Der Erfindung liegt damit das Problem zugrunde, einen Zugmitteltrieb dahingehend zu verbessern, dass stets eine hinreichende Zugmittelspannung, auch bei nur kurzzeitigem Betrieb des Antriebselements, gewährleistet ist.

Zur Lösung dieses Problems ist ein Zugmitteltrieb mit den Merkmalen des Anspruchs 1 vorgesehen.

Durch den erfindungsgemäßen Endanschlag wird vorteilhaft der Auslenkweg des Hebelarms der im Zugtrum sitzenden Spanneinrichtung begrenzt, so dass diese trotz Antriebs über das Antriebselement und der daraus resultierenden Verkürzungsneigung des Zugmittels im Zugtrum nur beschränkt ausgelenkt werden kann. Dies führt dazu, dass sich das Zugtrum nur begrenzt verkürzen und sich das Leertrum demzufolge auch nur begrenzt verlängern kann, so dass sichergestellt ist, dass die zweite, am Leertrum angreifende Spanneinrichtung in jedem Fall ihre volle Spannfunktion ausüben kann. Ein weiterer Vorteil ist, dass der Hebelarm, der am Endanschlag liegt, infolge des Kraftflusses der resultierenden Riemenkraft über den Endanschlag entlastet ist. Das heißt, die Belastung der Spanneinrichtung im Anlassfall wird reduziert. Auch kann im Anlassfall eine höhere Vorspannkraft aufgebaut werden, nachdem dann, wenn der im Zugtrum sitzende Hebelarm am Endanschlag anliegt, die gegenüberliegende Spanneinrichtung dominiert und, nachdem im Leertrum nur eine begrenzte Längung möglich ist, die Auslenkung des Hebelarms dieser Spanneinrichtung nicht allzu groß ist und mithin eine hohe Vorspannkraft aufgebracht werden kann.

Die zweite Spanneinrichtung ist mit einem gegen eine Rückstellkraft auslenkbaren Hebelarm mit einer Zugmittelrolle verbunden, an der das zu spannende Zugmittel geführt ist. Während das Antriebselement aktiv ist greift die zweite Spanneinrichtung an dem Leertrum des Triebs an und nach einem Wechsel der Antriebsfunktion, also bei inaktivem Antriebselement ist die zweite Spanneinrichtung dem Zugtrum zugeordnet. Jede getrennt voneinander, insbesondere an einem Motorblock der Brennkraftmaschine positionierte Spanneinrichtung umfasst einen gedämpft ausgeführten Endanschlag, der den Auslenkweg des Hebelarms begrenzt und gleichzeitig eine Geräuschdämpfung bewirkt.

Als Dämpfungselement kann ein Elastomer- oder Gummiteil, insbesondere in Form einer Auflage verwendet werden. Je nach Materialwahl und Stärke der Auflage können beliebige Dämpfungseigenschaften eingestellt werden. Anstelle einer Auflage kann aber auch ein relativ starker Elastomer- oder Gummiblock oder dergleichen eingesetzt werden. Eine Alternative sieht demgegenüber vor, als Dämpfungselement ein mit einem zähviskosen Medium, beispielsweise einem Öl gefüllten Elastomer- oder Gummihohlteil zu verwenden, das ebenfalls entsprechende Dämpfungseigenschaften aufweist. Ferner ist auch der Einsatz eines hydraulischen Dämpfungselements mit integrierter Feder zur Erzeugung der Vorspannkraft denkbar (RSH).

### Kurze Beschreibung der Zeichnungen

- Fig. 1: zeigt eine Prinzipdarstellung eines erfindungsgemäßen Zugmitteltriebs einer ersten Ausführungsform
- Fig. 2: zeigt eine Prinzipdarstellung eines erfindungsgemäßen Zugmitteltriebs einer zweiten Ausführungsform.

### Detaillierte Beschreibung der Zeichnungen

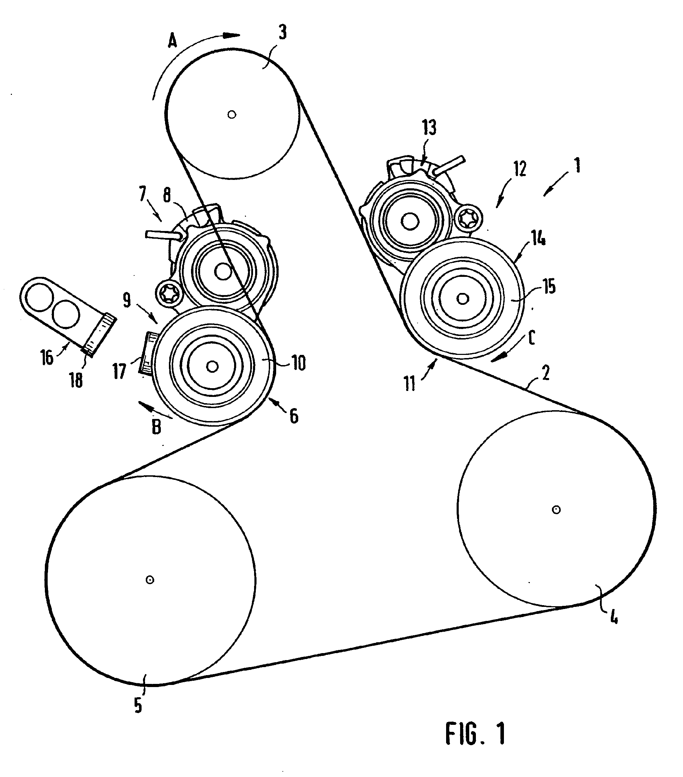

Fig. 1 zeigt einen erfindungsgemäßen Zugmitteltrieb 1, umfassend ein Zugmittel 2 in Form eines Riemens, der zum einen über einen Startergenerator 3 bzw. dessen Rolle und zum anderen im gezeigten Beispiel über zwei beliebige Nebenaggregate 4, 5 bzw. deren Triebscheiben geführt ist. Der Startergenerator hat eine Doppelfunktion. Zum einen dient er dazu, den Zugmitteltrieb 1, der beispielsweise mit der Brennkraftmaschine eines Kraftfahrzeugs gekoppelt ist, im Anlassfall kurzzeitig anzutreiben, bis der Motor läuft, wonach der Startergenerator in die Generatorfunktion wechselt, der Zugmitteltrieb 1 wird dann über den Brennkraftmotor angetrieben. Die Funktion eines solchen Zugmitteltriebs bzw. Startergenerators ist hinreichend bekannt und muss nicht näher erläutert werden.

Im Startfall dreht der Startergenerator 3 bzw. dessen Rolle in Richtung des Pfeils A, in diese Richtung wird folglich das Zugmittel 2 bewegt. Dies führt dazu, dass sich das Zugmittel 2 im Zugtrum 6 verkürzt. Im Zugtrum 6 sitzt eine erste Spanneinrichtung 7 umfassend eine an einem Drittgegenstand, beispielsweise einem hier nicht näher gezeigten Motorblock lagefest angeordnete Basis 8 sowie einen bezüglich derselben verschwenkbaren und gegen eine Rückstellkraft einer integrierten Feder oder dergleichen bewegbaren Hebelarm 9, an dem eine Zugmittelrolle 10 angeordnet ist, die außenseitig am Zugmittel 2 angreift. Verkürzt sich nun das Zugtrum 6, so wird der Hebelarm 9 in Fig. 1 nach außen geschwenkt, wie durch den Pfeil B dargestellt ist. Gleichzeitig verlängert sich das Leertrum 11 des Zugmittels 2, an dem eine zweite Spanneinrichtung 12, ebenfalls bestehend aus einer z. B. am Motorblock lagefest angeordneten Basis 13 und einem schwenkbaren Hebelarm 14 mit am Zugmittel angreifender Spannrolle 15, angreift. Infolge der Verlängerung des Zugtrums bewegt sich der Hebelarm in Richtung des Pfeils C, getrieben durch die Rückstellkraft, ausgeübt über eine nicht näher gezeigte Federanordnung, wodurch das sich verlängernde Leertrum nachgespannt wird.

Bei hinreichender Verschwenkbewegung in Richtung des Pfeils B läuft der Hebelarm 9 gegen einen z. B. am Motorblock angeordneten Endanschlag 16, wozu am Hebelarm 9 ein entsprechendes Anschlagteil 17 vorgesehen ist. Das heißt, die Verschwenkbewegung wird begrenzt, mithin auch die mögliche Verkürzung im Zugtrum und demzufolge auch die Längung im Leertrum. Dies führt nun dazu, dass auch die Einschwenkbewegung des Hebelarms 14 der zweiten Spanneinrichtung 12 begrenzt wird.

Am Endanschlag 16 ist ein Dämpfungselement 18 vorgesehen, z. B. eine Elastomer- oder Gummiauflage, auf die das Anschlagteil 17 gedämpft aufläuft.

Eine entsprechende Dämpfungsauflage kann auch am Anschlagteil 17 vorgesehen sein, oder nur dort.

Geht der Startergenerator nach erfolgreichem Anlassen in den eigentlichen Generatorbetrieb über, so wechselt, nachdem der Zugmitteltrieb 1 über den Brennkraftmotor angetrieben wird, das Zugtrum 6 zum Leertrum und das Leertrum 11 zum Zugtrum, die Anordnung geht im Wesentlichen in die in Fig. 1 gezeigte Position zurück, die beiden Hebelarme 9, 14 schwenken in entgegengesetzte Richtungen, dabei das jeweilige Trum nach wie vor spannend.

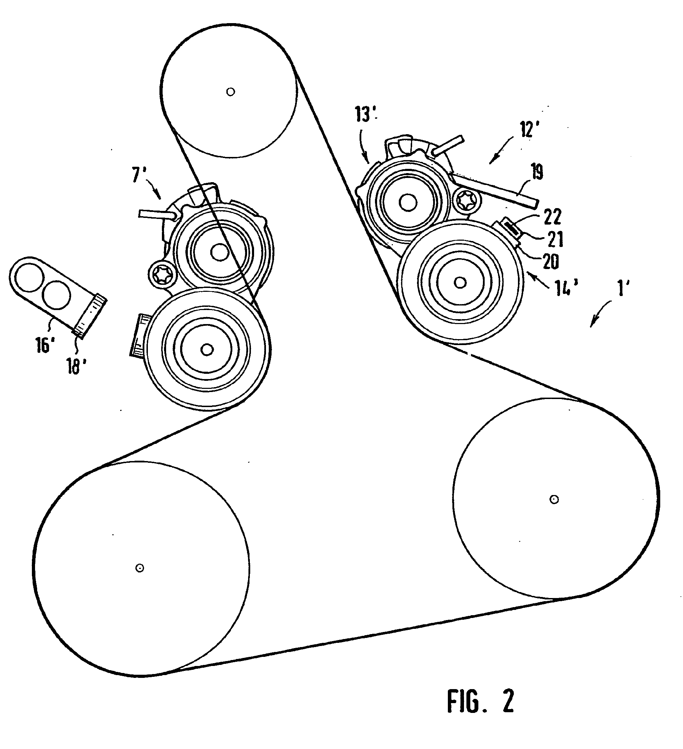

Die Wegbegrenzung des im Zugtrum sitzenden Hebelarms lässt zum einen eine Entlastung des Hebelarms zu, nachdem die resultierende Riemenkraft bei Anschlag am Endanschlag auf diesen übertragen wird. Eine Entlastung des zweiten Spannsystems ist nicht unbedingt erforderlich (jedoch möglich, siehe Fig. 2), da der Riemen maximal gestreckt werden kann, die Belastung auf das zweite Spannsystem ist infolge der Wegbegrenzung der ersten Spannrichtung jedoch begrenzt.

Fig. 2 zeigt einen zweiten Zugmitteltrieb 1', der im Wesentlichen dem Zugmitteltrieb 1 aus Fig. 1 entspricht und eine erste Spanneinrichtung 7' aufweist, die der Spanneinrichtung 7 aus Fig. 1 entspricht, und der ebenfalls ein entsprechender Endanschlag 16' mit Dämpfungsauflage 18' zugeordnet ist. Die zweite Spanneinrichtung 12' entspricht ebenfalls im Wesentlichen der Spanneinrichtung 12 aus Fig. 1, jedoch ist hier zusätzlich dem Hebelarm 14' ein Endanschlag 19 zugeordnet, der an der Spanneinrichtung 12' direkt angeordnet ist, vornehmlich an der Basis 13', und der zur Begrenzung des Auslenkweges des Hebelarms 14' dient. An dem Hebelarm 14' ist bei dieser Ausführungsform ein Anschlagteil 20 mit einem Dämpfungselement 21 vorgesehen, das im gezeigten Beispiel als hohles Elastomer- oder Gummiteil mit einer Füllung aus einem zähviskosen Material 22, z. B. einem Öl, ausgeführt ist. Selbstverständlich ist es möglich, auch hier einen separaten, beispielsweise am Motorblock oder einem anderen zusätzlichen Träger angeordneten Endanschlag 19 vorzusehen, wie natürlich auch der Endanschlag 16' der Spanneinrichtung 7' unmittelbar an der Spanneinrichtung 7 angeordnet sein könnte.

Durch entsprechende Auslegung der Spanneinrichtungen 7', 12' sowie der Positionierung der entsprechenden Endanschläge ist es nun möglich, die jeweils im je nach Betriebsfall wechselnden Zugtrum sitzende Spanneinrichtung gegen den jeweiligen Endanschlag zu fahren, so dass sich im jeweiligen Betriebsfall hinreichend hohe Vorspannkräfte sowie Entlastungen der jeweils im Zugtrum mit gegebenenfalls wechselnden Kräften beaufschlagten Hebelarmen ergibt.

### Bezugszahlen

- 1: Zugmitteltrieb
- 1': Zugmitteltrieb
- 2: Zugmittel
- 3: Startergenerator
- 4, 5: Nebenaggregate
- 6: Zugtrum
- 7: Spanneinrichtung
- 7': Spanneinrichtung
- 8: Basis
- 9: Hebelarm
- 10: Zugmittelrolle
- 11: Leertrum
- 12: Spanneinrichtung
- 12': Spaneinrichtung
- 13: Basis
- 13': Basis
- 14: Hebelarm
- 14': Hebelarm
- 15: Spannrolle
- 16: Endanschlag
- 16': Endanschlag
- 17: Anschlagteil
- 18: Dämpfungselement
- 18': Dämpfungsauflage
- 19: Endanschlag
- 20: Anschlagteil
- 21: Dämpfungselement
- 22: Material

## Patentansprüche

1. Zugmitteltrieb, insbesondere Riementrieb einer Brennkraftmaschine, umfassend ein im Trieb integriertes, diesen nur kurzzeitig antreibendes Antriebselement, insbesondere einen Startergenerator, sowie eine während des Betriebs des Antriebselements im Zugtrum des Triebs angreifende Spanneinrichtung mit einem gegen eine Rückstellkraft auslenkbaren Hebelarm mit einer Zugmittelrolle, an der das zu spannende Zugmittel geführt ist, sowie einer zweiten Spanneinrichtung, die mit einem gegen eine Rückstellkraft auslenkbaren Hebel mit einer Zugmittelrolle an dem zu spannenden Zugmittel geführt ist, wobei deren Hebelarmen (9, 14') jeweils ein den Auslenkweg begrenzender Endanschlag (16, 16', 19) zugeordnet ist, **dadurch gekennzeichnet, dass** die zwei dem Zugmitteltrieb (1, 1') zugeordneten Spanneinrichtungen (7, 7'; 12, 12') jeweils über eine Basis (8, 13, 13') an einem Motorblock lagefest angeordnet sind, und der jeweilige Hebelarm (9, 14') gegen den jeweiligen Endanschlag (16, 16', 19) gedämpft läuft, wozu an dem Endanschlag (16, 16', 19) und / oder an dem Hebelarm (9, 14') ein Dämpfungselement (18, 18', 21) vorgesehen ist, welches Dämpfungselement (21) ein mit einem viskosen Medium gefülltes Elastomer- oder Gummihohlteil ist.

2. Zugmitteltrieb nach Anspruch 1, **dadurch gekennzeichnet, dass** der Endanschlag (16, 16', 19) an der Spanneinrichtung (7, 7', 12') selbst oder einem benachbarten Drittgegenstand angeordnet ist.

3. Zugmitteltrieb nach Anspruch 1 oder 2, **dadurch gekennzeichnet, dass** der Endanschlag (16, 16', 19) derart positioniert ist, dass der Hebelarm (9, 14') in Höhe der Zugmittelrolle (10) gegen den Endanschlag (16, 16', 19) geführt wird.

## Claims

1. Flexible drive, in particular belt drive of an internal combustion engine, comprising a drive element, in particular a starter generator, which is integrated in the drive and drives the latter only briefly, and a tensioning device which acts in the pulling run of the drive during operation of the drive element and has a lever arm which can be deflected counter to a restoring force and has a drawing-means roller, on which the drawing means which is to be tensioned is guided, and a second tensioning device which is guided, on the drawing means which is to be tensioned, by way of a lever which can be deflected counter to a restoring force and has a drawing-means roller, the lever arms (9, 14') of the said tensioning devices being assigned in each case one end stop (16, 16', 19) which delimits the deflection travel, **characterized in that** the two tensioning devices (7, 7'; 12, 12') which are assigned to the flexible drive (1, 1') are arranged in a positionally fixed manner on an engine block in each case via a base (8, 13, 13'), and the respective lever arm (9, 14') runs in a damped manner against the respective end stop (16, 16', 19), for which purpose a damping element (18, 18', 21) is provided on the end stop (16, 16', 19) and/or on the lever arm (9, 14'), which damping element (21) is a hollow rubber part or a hollow elastomer part filled with a viscous medium.

2. Flexible drive according to Claim 1, **characterized in that** the end stop (16, 16', 19) is arranged on the tensioning device (7, 7', 12) itself or an adjacent third object.

3. Flexible drive according to Claim 1 or 2, **characterized in that** the end stop (16, 16', 19) is positioned in such a way that the lever arm (9, 14') is guided against the end stop (16, 16', 19) at the level of the drawing-means roller (10).

## Revendications

1. Entraînement à mécanisme de traction, en particulier entraînement à courroie d'un moteur à combustion interne, comprenant un élément moteur intégré dans l'entraînement et entraînant celui-ci seulement brièvement, notamment un démarreur-générateur, ainsi qu'un dispositif de serrage venant en prise pendant le fonctionnement de l'élément moteur dans le tronçon de traction de l'entraînement, avec un bras de levier pouvant être dévié à l'encontre d'une force de rappel et comprenant un rouleau de moyen de traction, sur lequel est guidé le moyen de traction à serrer, ainsi qu'un deuxième dispositif de serrage, qui est guidé avec un levier pouvant être dévié à l'encontre d'une force de rappel, avec un rouleau de moyen de traction sur le moyen de traction à serrer, ses bras de levier (9, 14') étant associés à chaque fois à une butée de fin de course (16, 16', 19) limitant la course de déviation, **caractérisé en ce que** les deux dispositifs de serrage (7, 7' ; 12, 12') associés à l'entraînement à mécanisme de traction (1, 1') sont disposés à chaque fois sur une base (8, 13, 13') de manière fixée sur un bloc moteur, et le bras de levier respectif (9, 14') se déplace de manière amortie vers la butée de fin de course respective (16, 16', 19), et à cet effet un élément d'amortissement (18, 18', 21) est prévu sur la butée de fin de course (16, 16', 19) et/ou sur le bras de levier (9, 14'), lequel élément d'amortissement (21) est une pièce creuse en élastomère ou en caoutchouc remplie d'un milieu visqueux.

2. Entraînement à mécanisme de traction selon la revendication 1, **caractérisé en ce que** la butée de fin de course (16, 16', 19) est disposée sur le dispositif de serrage lui-même (7, 7', 12') ou sur un troisième objet adjacent.

3. Entraînement à mécanisme de traction selon la revendication 1 ou 2, **caractérisé en ce que** la butée de fin de course (16, 16', 19) est positionnée de telle sorte que le bras de levier (9, 14') soit guidé à la hauteur du rouleau de moyen de traction (10) contre la butée de fin de course (16, 16', 19).
